# EUROPÄISCHE PATENTSCHRIFT

(11) **EP 2 573 211 B1**
(45) Veröffentlichungstag und Bekanntmachung des Hinweises auf die Patenterteilung: **15.05.2019**
(21) Anmeldenummer: 12185149.7
(22) Anmeldetag: 20.09.2012
(51) Int. Cl.: C25B 1/46, C25B 11/03, C25B 11/04, H01M 4/86, H01M 4/88, H01M 4/90, H01M 12/04, H01M 12/08, H01M 8/1018

(54) **Verfahren zur Herstellung von Gasdiffusionselektroden**
Method for their production of gas diffusion electrodes
Procédé de fabrication des électrodes de diffusion gazeuse

(30) Priorität: 23.09.2011 DE 102011083314
(43) Veröffentlichungstag der Anmeldung: 27.03.2013
(73) Patentinhaber: Covestro Deutschland AG, 51373 Leverkusen (DE)
(72) Erfinder: Bulan, Andreas, 40764 Langenfeld (DE); Kintrup, Jürgen, 51373 Leverkusen (DE); Schmitz, Norbert, 51766 Engelskirchen (DE); Karpenko, Alexander, 51377 Leverkusen (DE); Aßmann, Jens, 42781 Haan (DE)
(74) Vertreter: Levpat

(56) Entgegenhaltungen:
- EP-A2- 1 728 896
- EP-A2- 1 925 695
- WO-A1-03/023090
- US-A- 4 568 442

## Beschreibung

Die Erfindung betrifft ein Herstellungsverfahren für eine Sauerstoffverzehrelektrode, insbesondere für den Einsatz in der Chloralkali-Elektrolyse, mit einer verbesserten Katalysatorbeschichtung.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht und eine katalytisch aktive Komponente umfassen.

Sauerstoffverzehrelektroden, nachfolgend auch kurz SVE genannt, stellen eine Form von Gasdiffusionselektroden dar. Gasdiffusionselektroden sind Elektroden, in denen die drei Aggregatzustände - fest, flüssig und gasförmig - miteinander in Kontakt stehen und der feste, Elektronen leitende Katalysator eine elektrochemische Reaktion zwischen der flüssigen und der gasförmigen Phase katalysiert. Der feste Katalysator ist dabei üblicherweise zu einer porösen Folie typischerweise mit einer Dicke von mehr als 200 µm verpresst.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff-entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von grundsätzlichen Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine weitere Entwicklungsrichtung zur Nutzung der SVE-Technologie in der Chlor-Alkali-Elektrolyse stellt die zero gap Technologie dar. Hierbei ist die SVE in direktem Kontakt mit der Ionenaustauschermembran, die in der Elektrolysezelle den Anoden- vom Kathodenraum trennt. Ein Natronlaugespalt ist hierbei nicht vorhanden. Diese Anordnung wird üblicherweise auch in der Brennstoffzellen-Technologie angewandt. Nachteilig hierbei ist, dass die sich bildende Natronlauge durch die SVE zur Gasseite geleitet werden muss und anschließend an der SVE nach unten fließt. Hierbei darf es nicht zu einer Verstopfung der Poren in der SVE durch die Natronlauge oder zu Auskristallisation von Natronlauge in den Poren kommen. Es hat sich herausgestellt, dass hierbei auch sehr hohe Natronlauge-Konzentrationen entstehen können, wobei die Ionenaustauschermembran gegen diese hohen Konzentrationen nicht langzeitstabil ist (Lipp et al, J. Appl. Electrochem. 35 (2005)1015 - Los Alamos National Laboratory "Peroxide formation during chlor-alkali electrolysis with carbon-based ODC").

Eine herkömmliche Sauerstoffverzehrelektrode besteht typischerweise aus einem elektrisch leitenden Trägerelement, auf das die Gasdiffusionsschicht mit einer katalytisch aktiven Komponente aufgebracht ist. Als hydrophobe Komponente wird in der Regel Polytetrafluorethylen (PTFE) eingesetzt, welches zudem als polymerer Binder des Katalysators dient. Bei Elektroden mit Silber-Katalysator dient das Silber als hydrophile Komponente. Bei kohlenstoffgeträgerten Katalysatoren wird als Träger ein Kohlenstoff mit hydrophilen Poren eingesetzt, durch welche der Flüssigkeitstransport erfolgen kann.

Als Katalysator dient in der Regel ein Metall, eine Metallverbindung, eine nichtmetallische Verbindung oder eine Mischung von Metallverbindungen oder nichtmetallischen Verbindungen. Bekannt sind aber auch auf einen Kohlenstoffträger aufgebrachte Metalle, insbesondere Metalle der Platingruppe.

Praktische Bedeutung als Katalysator für die Reduktion von Sauerstoff in alkalischen Lösungen haben jedoch nur Platin und Silber erlangt.

Platin wird ausschließlich in geträgerter Form eingesetzt. Bevorzugtes Trägermaterial ist Kohlenstoff. Kohlenstoff leitet elektrischen Strom zu dem Platin-Katalysator. Die Poren in den Kohlenstoff-Partikeln lassen sich durch Oxidation der Oberflächen hydrophil einstellen und werden hierdurch geeignet für den Transport von Wasser.

Silber kann gemäß dem Stand der Technik auch mit Kohlenstoff als Träger und auch als feinteiliges metallisches Silber eingesetzt werden.

Bei der Herstellung von SVE mit ungeträgerten Silber-Katalysator kann das Silber zumindest teilweise in Form von Silberoxiden eingebracht werden, welche dann zu metallischem Silber reduziert werden. Die Reduktion erfolgt entweder in der Anfangsphase der Elektrolyse, in welcher bereits Bedingungen für eine Reduktion von Silberverbindungen bestehen, oder in einem gesonderten Schritt vor Inbetriebnahme der Elektrode durch elektrochemische, chemische oder andere, dem Fachmann bekannte Weise. Die Größe der Silberpartikel liegt im Bereich von größer 0,1 µm bis 100 µm, übliche Korngrößen sind 1 µm bis 20 µm.

Bei der Herstellung von Sauerstoffverzehrelektroden mit ungeträgerten Silberkatalysatoren lässt sich prinzipiell zwischen trockenen und nassen Fertigungsverfahren unterscheiden.

Bei den trockenen Verfahren wird ein Gemisch aus Katalysator und polymerer Komponente zu feinen Partikeln vermahlen. Dieses Vorprodukt wird anschließend auf das elektrisch leitende Trägerelement verteilt und bei Raumtemperatur verpresst. Ein solches Verfahren ist in EP 1728896 A2 beschrieben.

Bei den nassen Fertigungsverfahren wird ein Vorprodukt in Form einer Paste oder einer Suspension enthaltend feine Silberpartikeln und eine polymere Komponente verwendet. Als Suspensionsmittel wird in der Regel Wasser verwendet, es können aber auch andere Flüssigkeiten wie Alkohole oder deren Gemische mit Wasser verwendet werden. Bei der Herstellung der Pasten oder Suspension können oberflächenaktive Substanzen zugegeben werden, um deren Stabilität zu erhöhen. Die Pasten werden mittels Siebdruck oder Kalandrieren auf das Trägerelement aufgebracht, während die weniger viskosen Suspensionen üblicherweise auf das Trägerelement aufgesprüht werden. Die Paste bzw. Suspension wird nach Ausspülen des Emulgators schonend getrocknet und dann bei Temperaturen im Bereich des Schmelzpunktes des Polymers gesintert. Ein solches Verfahren wird zum Beispiel in US20060175195 A1 beschrieben.

Die vorab beschriebenen Sauerstoffverzehrelektroden mit ungeträgerten Silber-Katalysatoren weisen unter den Bedingungen der Elektrolyse von Alkali-Chloriden eine gute Langzeitstabilität auf.

Eine wichtige Voraussetzung für den Betrieb von Gasdiffusionselektroden ist, dass sowohl die flüssige als auch die gasförmige Phase gleichzeitig im Porensystem der Elektroden vorliegen können. Der Gastransport erfolgt in Poren mit hydrophoben Oberflächen. Dies sind in erster Linie die Poren, die durch die Fluorpolymer-Matrix gebildet werden. Hydrophobe Poren liegen aber auch in Kohlenstoff vor, sofern dieser nicht durch spezielle Behandlung mit einer hydrophilen Oberfläche versehen wurde. Der Flüssigkeitstransport erfolgt in den Poren mit hydrophiler Oberfläche. Dies sind in der Regel Poren, die durch den Silberkatalysator gebildet werden, aber auch Poren in hydrophil eingestellten Kohlenstoffen, wie sie als Träger für Katalysatoren eingesetzt werden. Die Poren für den Gastransport haben bevorzugt einen größeren Durchmesser als die Poren für den Flüssigkeitstransport. Letztere füllen sich komplett mit Flüssigkeit, die Kapillarkräfte wirken dem Gasdruck entgegen. Ist der Gasdruck zu hoch, wird Flüssigkeit aus den hydrophoben Poren verdrängt, umgekehrt werden bei zu hohem Druck auf der Flüssigseite hydrophobe Poren geflutet. Aufgrund der geringeren Kapillarwirkung wird die Flüssigkeit leichter aus den größeren hydrophoben Poren verdrängt als aus kleinen Poren.

Die SVK sollte bei einer Druckdifferenz zwischen dem Gas- und dem Flüssigkeitsraum im Bereich von 10 bis 60 mbar dicht sein. Hierbei ist mit dicht gemeint, dass mit dem bloßen Auge kein Austreten von Gasblasen in den Elektrolytraum beobachtbar ist, und weniger als 10 g /(h*cm²) Flüssigkeit durch die SVK tritt (g = Masse an Flüssigkeit, h = Stunde und cm² = geometrische Elektrodenoberfläche). Tritt jedoch zuviel Flüssigkeit durch die SVK, so kann diese nur an der der Gasseite zugewandten Seite nach unten abfließen. Dabei kann sich ein Flüssigkeitsfilm ausbilden, der den Gaszutritt zur SVK behindert und dadurch die Leistungsfähigkeit der SVK extrem negativ beeinflusst (Sauerstoff-Unterversorgung). Tritt zuviel Gas in den Elektrolytraum ein, blenden die Gasblasen einen Teil der Elektroden- und der Membranfläche ab, was zu einer Stromdichteverschiebung und damit im galvanostatischen Betrieb der Zelle zu einer lokalen Stromdichteerhöhung und über die Zelle zu einer unerwünschten Zellspannungserhöhung führt.

Bei der Herstellung der Elektroden nach den bekannten Trocken- und Nassverfahren entstehen Poren unterschiedlicher Größe und Verteilung. Die Größe und Verteilung lässt sich durch die Auswahl und Vorbehandlung der Polymeren und der Katalysatoren und die Art der Aufbringung auf den Träger steuern. Auch lassen sich bei der Herstellung der Sauerstoffverzehrelektrode porenbildende Komponenten zugeben. Bekannt ist zum Beispiel die Zugabe von Ammoniumcarbonat-Pulver zu dem Gemisch aus Katalysator und polymerer Komponente, welches nach Verdichten der Katalysator-Mischung durch Erwärmen ausgetrieben wird.

Der Strömungswiderstand in den Poren ist umgekehrt proportional deren Durchmesser. Bei den bekannten Verfahren zur Herstellung von SVK ergeben sich Porenverteilungen, welche einen hinreichenden Stofftransport gewährleisten. Es gibt jedoch immer einen Anteil an Poren, welche zu klein oder zu groß ausfallen. Während die kleinen Poren nicht weiter stören, bieten die großen Poren einen zu geringen Widerstand gegen den Gasfluss, wodurch es leicht zu einem unerwünschten Durchtritt von Gas durch die Elektrode kommt.

Auch können bei den genannten Press- und Sinterverfahren Kanäle und Risse in der Gasdiffusionsschicht auftreten, durch welche wiederum Gas in die flüssige Phase gelangen kann. Solche Kanäle und Risse können sich auch im laufenden Betrieb einer Sauerstoffverzehrelektrode bilden, wodurch sich die Leistung über die Betriebsdauer verschlechtert.

Aus der WO03023090A1 ist die Aufbringung von Partikeln auf eine Elektrode bekannt. Im besonderen wird beschrieben, dass feinteiliges Silberpulver in einer nicht näher spezifizierten Nafion-Lösung auf eine gesonderte silberbasierte Elektrode aufgebracht wird.

Es wird nicht beschrieben, worin die weitere Komponente dieser Nafionlösung besteht. Es wird auch nicht beschrieben ob das Suspensionsmittel bestehend aus Nafion und einem unbekannten Lösungsmittel durch Verdampfung entfernt wird.

Aus der Schrift EP1925695A2 ist gemäß Beispiel 8 die Herstellung einer Elektrode durch Aufbringen von einer wässrigen Suspension einer Mischung aus grobkörnigen Silber und Palladiumpartikeln (jeweils 0,1 µm) unter Zusatz von TRITON als mutmaßlichem Suspensionshilfsmittel bekannt geworden. Eine entsprechende Vorgehensweise unter Verwendung von feinteiligerem Silber ist der EP1925695A2 nicht offenbart.

Die Aufgabe der vorliegenden Erfindung besteht darin, eine Sauerstoffverzehrelektrode für die Sauerstoffreduktion im Alkalischen, beispielsweise für den Einsatz in der Chloralkali-Elektrolyse, bereitzustellen, die die vorstehenden Nachteile überwindet und eine niedrigere Betriebsspannung bei der Chloralkali-Elektrolyse ermöglicht.

Spezielle Aufgabe der Erfindung ist es ein Sauerstoffverzehrelektrode bereitzustellen, die eine niedrige Gasdurchlässigkeit aufweist als herkömmliche Elektroden.

Weitere Aufgabe der Erfindung ist es ein einfaches Mittel zur Verbesserung oder Reparatur bestehender Sauerstoffverzehrelektroden bereitzustellen, die undicht geworden sind oder in ihrer Leistung nicht hinreichend (geworden) sind.

Die Aufgabe wird dadurch gelöst, dass die an sich bekannten Sauerstoffverzehrelektroden (SVE) auf der der Flüssigkeit beziehungsweise der Ionenaustauschermembran zugewandten Seite mit einer feinteiligen hydrophilen Komponente versehen werden, wobei die feinteilige hydrophile Komponente in Form einer Suspension in einem durch Verdunstung entfernbaren Suspensionsmittel auf die Sauerstoffverzehrelektrode aufgebracht wird.

Es wird eine Sauerstoffverzehrelektrode beschrieben, aufweisend mindestens einen Träger in Form eines Flächengebildes und einer Beschichtung mit einer Gasdiffusionsschicht und einer katalytisch aktiven Komponente, dadurch gekennzeichnet, dass die Sauerstoffverzehrelektrode auf einer Seite, die im Betrieb der Flüssigkeit oder der Ionenaustauschermembran zugewendet wird, (nachfolgend auch kurz Flüssigkeitsseite genannt) zusätzlich eine feinteilige hydrophile Komponente mit einem mittleren Korndurchmesser von 20 - 100 nm, bevorzugt 40 - 80 nm, besonders bevorzugt 50 - 70 nm aufweist.

Bevorzugt weist die feinteilige hydrophile Komponente eine spezifische Oberfläche (Belegung mit Stickstoff nach BET DIN ISO 9277) im Bereich von 8 bis 12 m²/g auf.

Bevorzugt ist eine neue Sauerstoffverzehrelektrode, dadurch gekennzeichnet, dass die Sauerstoffverzehrelektrode auf ihrer einen, im Betrieb der Flüssigkeit zugewandten Seite eine feinteilige hydrophile Komponente aufweist, die die Reduktion von Sauerstoff katalysiert. Die der Flüssigkeit zugewandte Seite der Sauerstoffverzehrelektrode ist nach dem Einbau in eine Elektrolysezelle auch der Ionenaustauschermembran zugewandt.

Bei der feinteiligen hydrophilen Komponente handelt es sich besonders bevorzugt um Silberpartikel.

Der Ansatz der technischen Lösung hierbei ist, den Durchmesser von übergroßen hydrophilen Poren oder von Rissen auf der Flüssigkeitsseite der Sauerstoffverzehrelektrode durch Anlagerung feinteiliger hydrophiler Partikel zu verkleinern, hierbei aber weiterhin einen ausreichenden Flüssigkeitstransport zu gewährleisten und zusätzliche katalytisch aktive Zentren zu schaffen.

Der mittlere Durchmesser der feinteiligen hydrophilen Partikel liegt typischerweise um den Faktor 2 - 10 unter dem mittleren Durchmesser der in der Polymermatrix eingebundenen Katalysator-Partikel. Die feinteilige Komponente hat einen mittleren Partikeldurchmesser im Bereich von 20 bis 100 nm, bevorzugt 40 bis 80 nm, besonders bevorzugt 50 bis 70 nm. (Die Bestimmung der Partikeldurchmesser erfolgt mittels Elektronenmikroskopie oder vergleichbarere Verfahren). Die Herstellung vergleichbarer feinteiliger Partikel ist grundsätzlich bekannt. Beschreibungen der Herstellung entsprechender Partikel finden sich zum Beispiel in DE102006017696A1 oder US7201888B2. Eine Anwendung wie in der vorliegenden Erfindung ist jedoch nicht offenbart.

Die feinteilige Komponente ist hydrophil und lagert sich an den ebenfalls hydrophilen Katalysatorpartikeln an. Es können alle Stoffe eingesetzt werden, welche die entsprechende Partikelgröße und eine hydrophile Oberfläche d.h. eine Oberfläche mit einem Kontaktwinkel zu Wasser bei Standardbedingungen von kleiner 90° aufweisen.

Die feinteilige hydrophile Komponente besteht aus Stoffen, welche die Reduktion von Sauerstoff katalysieren. Beim Einsatz solcher katalytisch wirksamer Stoffe wird die Anzahl der katalytisch wirksamen Zentren im Dreiphasenbereich Gas/flüssig/fest erhöht. Die Leistung der Elektrode verbessert sich, welches in einer Reduktion der Betriebsspannung sichtbar wird. Erfindungsgemäß sind daher hydrophile Partikel auf Basis von Silber einzusetzen.

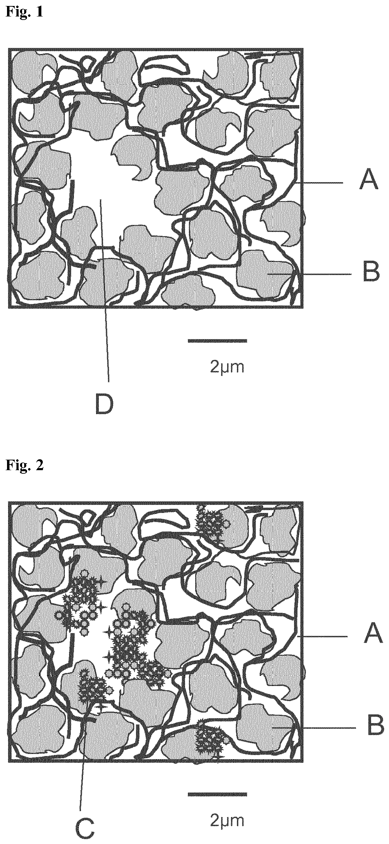

Die neuen Sauerstoffverzehrelektroden weisen auf der der Flüssigphase zugewandte Seite eine charakteristische Struktur auf. Im Rasterelektronenmikroskop sind an der Oberfläche filigrane Agglomerationen von kleinteiligen Partikeln zu erkennen, welche sich in den Räumen zwischen den in der Matrix gebundenen Katalysatorpartikeln eingelagert haben und mit diesen in Kontakt stehen. Die kleinteiligen Partikel bilden Brücken zwischen einzelnen Katalysatorpartikeln. Die freie Fläche der Poren zwischen den gebundenen Katalysatorpartiklen wird verkleinert. Eine schematische Darstellung der Oberfläche einer Sauerstoffverzehrelektrode vor und nach der Behandlung mit dem erfindungsgemäßen Verfahren wird in Fig. 1 und 2 gegeben.

In einer neuen Sauerstoffverzehrelektrode befinden sich pro Quadratmeter Elektrodenfläche bevorzugt 100 mg bis 10 g, besonders bevorzugt 1 g bis 5 g der feinteiligen hydrophilen Partikel. Die hydrophilen Partikel lagen sich bevorzugt an der Oberfläche der Sauerstoffverzehrelektrode in den Öffnungen der hydrophilen Poren ab, dringen aber nicht tiefer in die Poren ein. Die hydrophilen Partikel sind insbesondere miteinander verbunden und bilden teilweise Brücken zwischen den in der Matrix gebundenen Katalysatorpartikeln Die hydrophilen Partikel decken einen Teil der Porenöffnung ab, bevorzugt werden 5 - 80 % der Eintrittsfläche der hydrophilen Poren in der Sauerstoffverzehrelektrode abgedeckt.

Der Auftrag der feinteiligen hydrophilen Komponente erfolgt in der Weise, dass sich die feinen hydrophilen Partikel in den von den in der Polymermatrix eingebundenen Katalysator-Partikel gebildeten Poren einlagern bzw. an die Katalysator-Partikel anlagern. Der Auftrag erfolgt bevorzugt in einer Suspension auf eine aus Träger, Gasdiffusionsschicht und katalytisch aktiver Komponente vorgebildete Sauerstoffverzehrelektrode. Die Konzentration der hydrophilen Partikel in der Suspension beträgt bevorzugt 0,1 bis 50 Gew.-%, besonders bevorzugt 1 bis 20 Gew.-%.

Gegenstand der Erfindung ist ein Verfahren zur Herstellung von Sauerstoffverzehrelektroden, aufweisend mindestens einen Träger in Form eines Flächengebildes und einer Beschichtung mit einer Gasdiffusionsschicht und einer katalytisch aktiven Komponente, wobei die Sauerstoffverzehrelektrode auf einer Seite, die im Betrieb der Flüssigkeit oder der Ionenaustauschermembran zugewendet wird, zusätzlich eine feinteilige hydrophile Komponente mit einem mittleren Korndurchmesser, bestimmt mittels Elektronenmikroskopie, im Bereich von 40 bis 80 nm, besonders bevorzugt 50 bis 70 nm aufweist, dadurch gekennzeichnet, dass eine feinteilige, hydrophile Komponente, die die Reduktion von Sauerstoff katalysiert, wobei die feinteilige hydrophile Komponente Silber ist, in einer Suspension mit einer Konzentration von 0,1 - 50 Gew.-%, bevorzugt 1 - 20 Gew.-% auf eine flächige Rohelektrode umfassend mindestens einen Träger in Form eines Flächengebildes und einer Beschichtung mit einer Gasdiffusionsschicht und einer katalytisch aktiven Komponente aufgetragen oder aufgesprüht wird und dass das Suspensionsmittel im Anschluss durch Verdampfung entfernt wird, wobei das Suspensionsmittel einen Siedepunkt von 50 - 150°C aufweist, wobei die Suspension aus der feinteiligen, hydrophilen Komponente, dem Suspensionsmittel und gegebenenfalls einem Dispergierhilfsmittel besteht.

Bevorzugt wird als Rohelektrode in dem neuen Verfahren eine gebrauchte oder undichte (d.h. mit einem stärkeren Gas- oder Flüssigkeitsdurchtritt im Betrieb behaftete) Sauerstoffverzehrelektrode eingesetzt.

Als Suspensionsmittel können die für die jeweilige feinteilige Komponente geeigneten Flüssigkeiten eingesetzt werden. So können protische Suspensionsmittel wie Wasser oder Alkohole oder aprotische polare Suspensionsmittel wie Aceton oder Dimethylcarbonat verwendet werden. Erfindungsgemäß werden Suspensionsmittel mit einer hohen Flüchtigkeit und einem Siedepunkt von 50 - 150 °C, bevorzugt 60 - 100 °C. Bevorzugt sind Alkohole, besonders bevorzugt i-Propanol. Denkbar sind auch Mischungen der vorgenannten Suspensionsmittel. Der Suspension können die üblichen Dispergierhilfsmittel wie Fettsäuren oder Polivinylpyrrolidon zugefügt werden.

Die Aufbringung der Suspension kann durch eine der grundsätzlich bekannten Beschichtungstechnologien wie Auftrag mittels eines Pinsels, einer Walze, eines Rakels oder eines anderen Werkzeugs, oder durch direktes Aufsprühen oder Gießen erfolgen. Die Beschichtung kann in einem Arbeitsgang oder in mehreren Arbeitsgängen mit zwischenzeitlicher Entfernung zumindest eines Teils des Lösungsmittels erfolgen.

Es werden bevorzugt 100 mg bis 10 g, bevorzugt 1 bis 5 g der feinteiligen hydrophilen Komponente pro Quadratmeter Elektrodenfläche aufgetragen.

Die Trocknung der aufgetragenen Suspension erfolgt nach aus der Beschichtungstechnologie grundsätzlich bekannten Techniken. Bevorzugt ist die Trocknung in einem Umlufttrockner, wobei das verdunstete das Lösungsmittel zurück gewonnen wird. Die Trocknung kann durch zusätzliche Erwärmung, zum Beispiel durch Infrarotstrahler, unterstützt werden.

Die Temperatur und Luft- bzw. Gasgeschwindigkeit werden so gewählt, dass kein Abtrag der Nanopartikel mit dem Gasstrom erfolgt. Die Temperatur sollte zumindest in der Anfangsphase des Trocknungsschritts unterhalb des Siedepunktes des Suspensionsmittels liegen, nach Entfernung von über 90 % des Suspensionsmittels kann die Temperatur auf Bereiche oberhalb des Siedepunktes angehoben werden. Die Strömungsgeschwindigkeit wird bevorzugt so gewählt, dass sich an der Oberfläche der Elektrode eine laminare Strömung bildet. Bevorzugt ist eine Strömungsgeschwindigkeit kleiner 0,45 m/sec.

Die Elektrode kann nach Entfernen des Lösungsmittels durch weiteres Erwärmen gesintert werden. Die Sinterung erfolgt insbesondere in dem von der Herstellung der Elektroden bekannten Temperaturbereich von 60 - 330 °C.

Die Elektrode kann nach Entfernen des Lösungsmittels durch Pressen weiter verdichtet werden. Das Pressen kann mittels eines Stempels, einer Walze oder einer anderen an sich bekannten Presstechnik erfolgen. Bevorzugt wird die Verdichtung mittels Walzen. Besonders bevorzugt wird hierbei eine Anpresskraft von 0,01 bis 7 kN/cm (Linienkraft) angewendet.

Die Aufbringung der feinteiligen Komponente erfolgt bevorzugt auf eine nach einem der bekannten Herstellverfahren hergestellte Elektrode in einem nachgeschalteten Bearbeitungsschritt. So erhält man nach dem eingangs erwähnten aus dem Stand der Technik bekannten Trocken- oder Nassherstellungsverfahren in einem ersten Schritt an sich gebrauchsfertige Sauerstoffverzehrelektrode. Werden diese Sauerstoffverzehrelektroden erfindungsgemäß durch Aufsprühen einer Suspension von Silber mit einer mittleren Korngröße von 40- 80 nm, bevorzugt 50 - 70 nm behandelt, so erhält man nach Verdunsten des Suspensionsmittel und anschließender Trocknung Elektroden, welche im Vergleich zu den unbehandelten Elektroden eine deutlich verbesserte Dichtigkeit gegenüber Sauerstoff aufweisen und bei einer verringerten Betriebsspannung arbeiten.

Die Aufbringung der feinteiligen Komponente kann bereits vor Fertigstellung der Elektrode erfolgen. So kann bei einer nach dem Nassverfahren hergestellten Elektrode die feinteilige Komponente vor dem Sinterschritt aufgebracht werden.

Grundsätzlich eignen sich alle Gasdiffusionselektroden, unabhängig von ihrer Zusammensetzung und der Art ihrer Herstellung, als Ausgangsstufe für die Herstellung der erfindungsgemäßen Sauerstoffverzehrelektroden.

Bevorzugt wird die Aufbringung der feinteiligen hydrophilen Komponente auf eine Sauerstoffverzehrelektrode angewendet, die als katalytisch aktive Komponente Silber, Silber-I-Oxid oder Silber-II-Oxid, oder Gemische von Silber- und Silberoxid aufweist. Hierbei beträgt der Silbergehalt 65 bis 97 Gew.% sowie 3 bis 35 Gew. % eines nicht löslichen fluorierten Polymeren, insbesondere PTFE.

Besonders bevorzugt weist die Sauerstoffverzehrelektrode Mischungen auf, die als katalytisch aktive Komponente 70 bis 95 Gew.-% Silberoxid, insbesondere Silber-I-oxid, und 0 - 15 Gew.-% Silber-Metall sowie 3 - 15 Gew.-% eines nicht löslichen fluorierten Polymeren, insbesondere PTFE, enthalten.

Das Trägerelement kann insbesondere in Form eines Netzes, Vlieses, Schaums, Gewebes, Geflechts, Gewirks, Streckmetall oder eines anderen durchlässigen flächigen Gebildes eingesetzt werden. Bevorzugt wird ein flexibles textiles Gebilde bevorzugt elektrisch leitendes, insbesondere aus Metallfäden bestehend eingesetzt. Als Material für das Trägerelement sind Nickel und mit Silber beschichtetes Nickel besonders geeignet.

Eine weitere bevorzugte Ausführung der Sauerstoffverzehrelektrode ist daher dadurch gekennzeichnet, dass sie als Trägerelement ein flexibles textiles Gebilde, insbesondere aus Metallfäden, bevorzugt aus Nickel oder und mit Silber beschichtetes Nickel aufweist.

Die Sauerstoffverzehrelektrode wird bevorzugt als Kathode geschaltet, und insbesondere in einer Elektrolysezelle für die Elektrolyse von Alkalichloriden, bevorzugt von Natriumchlorid oder Kaliumchlorid, besonders bevorzugt von Natriumchlorid betrieben. Beschrieben ist folglich auch eine Elektrolysevorrichtung, insbesondere für die Chloralkalielektrolyse, aufweisend eine zuvor beschriebene Sauerstoffverzehrelektrode als Sauerstoff verzehrende Kathode. Alternativ kann die Sauerstoffverzehrelektrode bevorzugt als Kathode in einer Brennstoffzelle geschaltet werden.

Beschrieben wird noch die Verwendung der neuen Sauerstoffverzehrelektrode zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiCl, KCl oder NaCl.

Die Sauerstoffverzehrelektrode wird besonders bevorzugt bei der Chlor-Alkali-Elektrolyse und hier insbesondere bei der Natriumchlorid-(NaCl)-Elektrolyse eingesetzt.

Es wurde überraschend festgestellt, dass sich an sich bekannte Sauerstoffverzehrelektrode durch Aufbringung einer feinteiligen Komponente, wie oben beschrieben, verbessern oder hinsichtlich ihrer Gasdichtigkeit verbessern lassen. Beschrieben wird daher auch die Verwendung Suspensionen feinteiliger Komponenten zur Reparatur, Abdichtung oder Verbesserung schadhafter oder gebrauchter Sauerstoffverzehrelektroden.

So lassen sich Elektroden, deren Dichtigkeit im Betrieb nachgelassen hat und welche in der Folge eine Erhöhung der Betriebsspannung aufweisen, durch Auftrag einer Suspension feinteiliger Partikel verbessern. Es können aber auch frisch gefertigte Sauerstoffverzehrelektroden, bei welchen bei der Überprüfung der Gasdichtigkeit und / oder der Betriebsspannung eine Minderleistung festgestellt wurde, durch Auftrag einer Suspension feinteiliger Partikel nachgebessert werden.

Die Erfindung wird nachfolgend anhand der Figuren durch die Beispiele, welche jedoch keine Beschränkung der Erfindung darstellen, näher erläutert.

Es zeigen:
- Fig. 1: Die Oberfläche der Sauerstoffverzehrelektrode vor der Behandlung mit dem erfindungsgemäßen Verfahren
- Fig.2: Die Oberfläche der Sauerstoffverzehrelektrode nach der Behandlung mit dem erfindungsgemäßen Verfahren

In den Figuren haben die Bezugszeichen die nachstehende Bedeutung:
A: PTFE
B: Silberkristalle
C: Nanoscaliges Silber
D: Übergroße hydrophile Pore

### Beispiel

Eine nach dem Nassverfahren gefertigte Sauerstoffverzehrelektrode wurde in eine Elektrolysehalbzelle eingebaut. Die Elektrode hatte bei 4 kA/m² ein Potential von - 400 mV (gemessen gegen eine Ag/AgCl/Elektrode). Die Elektrode lässt bei einer Druckdifferenz von 20 mbar zwischen Gasseite und Flüssigseite sichtbare Mengen Sauerstoff durch (Bildung kleiner Gasblasen)

Die Sauerstoffverzehrelektrode wurd ausgebaut, mit deionisiertem Wasser gespült und äußerlich getrocknet. Es wurden 100 g / m² einer Suspension von 1,4 g nanoteiligem Silberpulver vom Typ SP-7000-95 der Ferro Corporation, Cleveland, USA, (mittlerer Korndurchmesser 60 nm) in 100 g i-Propanol aufgesprüht. Das Isopropanol wurde verdunstet, die Elektrode wurde dann für 30 min bei 80 °C im Trockenschrank nachgetrocknet und dann wieder in die Elektrolysehalbzelle eingebaut. Die Elektrode hatte bei 4 kA/m² ein Potential von - 320 mV und war bei einer Druckdifferenz von 40 mbar zwischen Gasseite und Flüssigseite dicht.

Somit wurde durch die Behandlung der Oberfläche mit nanoteiligem Silberpulver das Potenzial um 80 mV verbessert und eine deutlicher Gas- und Flüssigkeitsdichtheit erzeugt.

Fig. 1 zeigt schematisch die der Flüssigkeit zugewandte Oberfläche der Sauerstoffverzehrelektrode in mikroskopischer Sicht vor der Behandlung mit einer feinteilige Silberpartikel enthaltenden Suspension. Die Katalysator-Partikel B werden von der fadenförmigen PTFE-Matrix A gehalten, durch eine übergroße Pore D kann im Betrieb Sauerstoff auf die Flüssigseite durchbrechen.

Fig. 2 zeigt die Oberfläche derselben Sauerstoffverzehrelektrode nach Behandlung mit einer feinteilige Silberpartikel enthaltenden Suspension. Die feinteiligen Silberpartikel C haben sich zwischen den Katalysatorpartikeln angelagert, die freie Fläche der Porenöffnung ist verringert. Die Pore kann die Flüssigkeit besser halten, ein Durchtreten des Sauerstoffs in die flüssige Phase ist erschwert. Weiterhin hat sich die Zahl der katalytisch wirksamen aktiven Zentren im Phasen-Grenzbereich erhöht, welches einen vermehrten Umsatz zur Folge hat.

## Patentansprüche

1. Verfahren zur Herstellung einer Sauerstoffverzehrelektrode, aufweisend mindestens einen Träger in Form eines Flächengebildes und einer Beschichtung mit einer Gasdiffusionsschicht und einer katalytisch aktiven Komponente, wobei die Sauerstoffverzehrelektrode auf einer Seite, die im Betrieb der Flüssigkeit oder der Ionenaustauschermembran zugewendet wird, zusätzlich eine feinteilige hydrophile Komponente mit einem mittleren Korndurchmesser, bestimmt mittels Elektronenmikroskopie, im Bereich von 40 bis 80 nm, besonders bevorzugt 50 bis 70 nm aufweist, **dadurch gekennzeichnet, dass** eine feinteilige, hydrophile Komponente, die die Reduktion von Sauerstoff katalysiert, wobei die feinteilige hydrophile Komponente Silber ist, in einer Suspension mit einer Konzentration von 0,1 - 50 Gew.-%, bevorzugt 1 - 20 Gew.-% auf eine flächige Rohelektrode umfassend mindestens einen Träger in Form eines Flächengebildes und einer Beschichtung mit einer Gasdiffusionsschicht und einer katalytisch aktiven Komponente aufgetragen oder aufgesprüht wird und dass das Suspensionsmittel im Anschluss durch Verdampfung entfernt wird, wobei das Suspensionsmittel einen Siedepunkt von 50 - 150°C aufweist, wobei die Suspension aus der feinteiligen, hydrophilen Komponente, dem Suspensionsmittel und gegebenenfalls einem Dispergierhilfsmittel besteht.

2. Verfahren nach Anspruch 1, **dadurch gekennzeichnet, dass** das Suspensionsmittel einen Siedepunkt von 60 - 100 ° C aufweist.

3. Verfahren nach einem der Ansprüche 1 bis 2, **dadurch gekennzeichnet, dass** die Sauerstoffverzehrelektrode als katalytisch aktive Komponente Silber, Silber-I-Oxid oder Silber-II-Oxid, oder Gemische von Silber- und Silberoxid aufweist.

4. Verfahren nach einem der Ansprüche 1 bis 3, **dadurch gekennzeichnet, dass** die Sauerstoffverzehrelektrode außer der feinteiligen hydrophilen Komponente Mischungen aufweist, die als katalytisch aktive Komponente 70 bis 95 Gew.-% Silberoxid, insbesondere Silber-I-oxid, und 0 bis 15 Gew.-% Silber-Metall sowie 3 bis 15 Gew.-% eines nicht löslichen fluorierten Polymeren, insbesondere PTFE, enthalten.

5. Verfahren nach einem der Ansprüche 1 bis 4, **dadurch gekennzeichnet, dass** die Sauerstoffverzehrelektrode als Trägerelement ein elektrisch leitendes flächiges Gebilde bevorzugt auf Basis von Nickel oder mit Silber beschichtetem Nickel aufweist.

6. Verfahren nach einem der Ansprüche 1 bis 5, **dadurch gekennzeichnet, dass** das Suspensionsmittel ein Alkohol, bevorzugt i-Propanol ist.

7. Verfahren nach einem der Ansprüche 1 bis 6, **dadurch gekennzeichnet, dass** die Menge der aufgetragenen feinteiligen Komponente 100 mg bis 10 g, bevorzugt 1 bis 5 g pro Quadratmeter Elektrodenfläche beträgt.

8. Verfahren nach einem der Ansprüche 1 bis 7, **dadurch gekennzeichnet, dass** als Rohelektrode eine gebrauchte oder eine bei einer Druckdifferenz zwischen dem Gas- und dem Flüssigkeitsraum im Bereich von 10 bis 60 mbar undichte Sauerstoffverzehrelektrode eingesetzt wird.

## Claims

1. Process for producing an oxygen-depolarized electrode comprising at least one carrier in the form of a flat structure and a coating with a gas diffusion layer and a catalytically active component, wherein the oxygen-depolarized electrode, on a side which, in operation, faces towards the liquid or the ion exchanger membrane, additionally has a finely divided hydrophilic component having a mean particle diameter, determined by means of electron microscopy, in the range from 40 to 80 nm and more preferably 50 to 70 nm, **characterized in that** a finely divided, hydrophilic component which catalyses the reduction of oxygen, wherein the finely divided hydrophilic component is silver, is applied or sprayed in a suspension with a concentration of 0.1-50%, by weight, preferably 1-20% by weight, to a flat base electrode comprising at least one carrier in the form of a flat structure and a coating with a gas diffusion layer and a catalytically active component, and **in that** the suspension medium is subsequently removed by evaporation, wherein the suspension medium has a boiling point of 50-150°C, wherein the suspension consists of the finely divided, hydrophilic component, the suspension medium and optionally a dispersing auxiliary.

2. Process according to Claim 1, **characterized in that** the suspension medium has a boiling point of 60-100°C.

3. Process according to either of Claims 1 and 2, **characterized in that** the oxygen-depolarized electrode comprises, as a catalytically active component, silver, silver(I) oxide or silver(II) oxide, or mixtures of silver and silver oxide.

4. Process according to any of Claims 1 to 3, **characterized in that** the oxygen-depolarized electrode, apart from the finely divided hydrophilic component, comprises mixtures which contain, as a catalytically active component, 70 to 95% by weight of silver oxide, especially silver (I) oxide, and 0 to 15% by weight of silver metal and 3 to 15% by weight of an insoluble fluorinated polymer, especially PTFE.

5. Process according to any of Claims 1 to 4, **characterized in that** the oxygen-depolarized electrode has, as a carrier element, an electrically conductive flat structure, preferably based on nickel or silver-coated nickel.

6. Process according to any of Claims 1 to 5, **characterized in that** the suspension medium is an alcohol, preferably i-propanol.

7. Process according to any of Claims 1 to 6, **characterized in that** the amount of the finely divided component applied is 100 mg to 10 g, preferably 1 to 5 g, per square metre of electrode area.

8. Process according to any of Claims 1 to 7, **characterized in that** the base electrode used is a spent oxygen-depolarized electrode or an oxygen-depolarized electrode that is leaky at a pressure differential between the gas space and the liquid space in the range from 10 to 60 mbar.

## Revendications

1. Procédé de fabrication d'une électrode à consommation d'oxygène, comprenant au moins un support sous la forme d'une structure plate et un revêtement comprenant une couche de diffusion de gaz et un composant à activité catalytique, l'électrode à consommation d'oxygène comprenant en outre sur un côté, qui est orienté à l'état de fonctionnement vers le liquide ou la membrane échangeuse d'ions, un composant hydrophile finement divisé qui a un diamètre de particule moyen, déterminé par microscopie électronique, dans la plage allant de 40 à 80 nm, de manière particulièrement préférée de 50 à 70 nm, **caractérisé en ce qu'**un composant hydrophile finement divisé, qui catalyse la réduction de l'oxygène, le composant hydrophile finement divisé étant de l'argent, est appliqué ou pulvérisé dans une suspension ayant une concentration de 0,1 à 50 % en poids, de préférence de 1 à 20 % en poids, sur une électrode brute plate comprenant au moins un support sous la forme d'une structure plate et un revêtement comprenant une couche de diffusion de gaz et un composant à activité catalytique, et **en ce que** le milieu de suspension est ensuite éliminé par évaporation, le milieu de suspension présentant un point d'ébullition de 50 à 150 °C, la suspension étant constituée par le composant hydrophile finement divisé, le milieu de suspension et éventuellement un adjuvant de dispersion.

2. Procédé selon la revendication 1, **caractérisé en ce que** le milieu de suspension présente un point d'ébullition de 60 à 100 °C.

3. Procédé selon l'une quelconque des revendications 1 à 2, **caractérisé en ce que** l'électrode à consommation d'oxygène comprend en tant que composant à activité catalytique de l'argent, un oxyde d'argent I ou un oxyde d'argent II, ou des mélanges d'argent et d'oxyde d'argent.

4. Procédé selon l'une quelconque des revendications 1 à 3, **caractérisé en ce que** l'électrode à consommation d'oxygène comprend, en plus du composant hydrophile finement divisé, des mélanges qui contiennent en tant que composant à activité catalytique 70 à 95 % en poids d'oxyde d'argent, notamment d'un oxyde d'argent I, et 0 à 15 % en poids de métal argent, ainsi que 3 à 15 % en poids d'un polymère fluoré non soluble, notamment le PTFE.

5. Procédé selon l'une quelconque des revendications 1 à 4, **caractérisé en ce que** l'électrode à consommation d'oxygène comprend en tant qu'élément support une structure plate électriquement conductrice, de préférence à base de nickel ou de nickel revêtu avec de l'argent.

6. Procédé selon l'une quelconque des revendications 1 à 5, **caractérisé en ce que** le milieu de suspension est un alcool, de préférence l'i-propanol.

7. Procédé selon l'une quelconque des revendications 1 à 6, **caractérisé en ce que** la quantité du composant finement divisé appliqué est de 100 mg à 10 g, de préférence de 1 à 5 g par mètre carré de surface d'électrode.

8. Procédé selon l'une quelconque des revendications 1 à 7, **caractérisé en ce qu'**une électrode à consommation d'oxygène usagée ou une électrode à consommation d'oxygène non étanche à une différence de pression entre la chambre de gaz et de liquide dans la plage allant de 10 à 60 mbar est utilisée en tant qu'électrode brute.
